# EUROPÄISCHE PATENTSCHRIFT

(11) **EP 1 258 280 B1**
(45) Veröffentlichungstag und Bekanntmachung des Hinweises auf die Patenterteilung: **29.12.2004**
(21) Anmeldenummer: 02010389.1
(22) Anmeldetag: 08.05.2002
(51) Int. Cl.: B01D 53/30, A62C 3/04, G08B 17/117

(54) **Verfahren zur kontinuierlichen analytischen Bestimmung von Kohlenmonoxid in Abluft**
Process for the continuous analytical determination of carbon monoxide in exhaust air
Procédé pour la determination analytique en continu du monoxyde de carbone dans l'air d'évacuation

(30) Priorität: 19.05.2001 DE 10124103
(43) Veröffentlichungstag der Anmeldung: 20.11.2002
(73) Patentinhaber: MG Technologies AG, 60325 Frankfurt am Main (DE); Weag, 61169 Friedberg (DE)
(72) Erfinder: Herden, Hansjörg, 63110 Rodgau (DE); Piepenhagen, Udo, 64832 Babenhausen (DE); Schäfer, Kurt, 54498 Piesport (DE); Roth, Jürgen, 35398 Giessen (DE); Kolbe, Herbert, 41352 Korschenbroich (DE)
(74) Vertreter: Stenger, Watzke & Ring Patentanwälte

(56) Entgegenhaltungen:
- EP-A- 0 235 630
- DE-A- 19 850 564
- US-A- 4 002 229
- US-A- 4 637 473
- GUTWERK, D. ET AL.: "Lokalisierung und Bekämpfung von verdeckten Deponiebränden" MÜLL UND ABFALL, Nr. 2, 2000, Seiten 77-80, XP001121024

## Beschreibung

Die Erfindung betrifft ein Verfahren zur kontinuierlichen analytischen Bestimmung von Kohlenmonoxid in der Abluft einer in einem geschlossenen Raum zur Lagerung, Entwässerung und/oder Behandlung für einen planmäßigen Aufenthalt eingelagerten ganz oder teilweise aus biologischer Substanz bestehenden Schüttung, in die kontinuierlich eine gesteuerte Luftmenge eingeblasen und von dieser durchströmt wird.

Wenn nicht ausreichend getrocknete, aus organischen Stoffen gebildete Haufwerke eingelagert werden, entsteht durch biologische Prozesse eine Selbsterwärmung auf eine Temperatur von etwa 45 °C, durch die das noch in den Haufwerken enthaltene Wasser verdunstet wird. Durch die bei dieser Temperatur sich sehr stark vermehrenden mesophilen Mikroorganismen wird eine weitere Temperaturerhöhung auf etwa 75 °C verursacht. Bei dieser Temperatur entwickeln sich thermophile Mikroorganismen, die enzymatische in einem Temperaturbereich von etwa 80 °C bis etwa 100 °C ablaufende Zersetzungsprozesse auslösen. Da bei diesen Temperaturen die organischen Stoffe dann kein Wasser mehr enthalten, treten unkontrollierte autokatalytische Zersetzungsprozesse ein, die auf Grund chemischer Reaktionen und physikalischer Vorgänge u.a. auch brennbare Gase, wie Kohlenwasserstoffe, Kohlenmonoxid, Wasserstoff und andere, freisetzen. Es kann dann eine lokale Überhitzung bis zu etwa 225 °C eintreten und in Folge dessen die Selbstentzündung brennfähiger Substanzen erfolgen. Die durch Selbstentzündung entstandenen Brandherde können über längere Zeit als Glimmbrände bestehen, ohne dass sich diese durch Rauchentwicklung bemerkbar machen. Solche Glimmbrände können bis zur Haufwerksoberfläche wirksam werden, so dass es zur Ausbildung von Flammbränden kommt (DE-Z.: Brandschutz / Deutsche Feuerwehrzeitung 11/1994, S. 760 bis 765). Dieses Prinzip der biologischen Selbstentzündung gilt praktisch für alle eingelagerten Schüttungen, die ganz oder teilweise aus biologischer Substanz bestehen, wie Stroh, Spreuabfälle, Siedlungsabfälle, Hausmüll, Holzabfälle etc. Ferner kann auch eine starke Sauerstoff-Adsorption an feinteiligen Oberflächen von biologischen Substanzen zu deren Selbstentzündung führen.

Da die Schüttungen unterschiedliche Zusammensetzung mit unterschiedlichem Brandverhalten und Heizwert in unterschiedlicher Konzentration, Verteilung und Dichte aufweisen, ist es unmöglich, die Eintrittswahrscheinlichkeit oder das Ausmaß von Bränden von vornherein abzuschätzen. Zur Erkennung von Glimmbränden in Deponien ist es bekannt, Kohlenmonoxid und Wasserstoff im Deponiegas spurenanalytisch zu bestimmen, da diese Gase in recht hohen Konzentrationen bei Bränden, die unter mangelhafter Sauerstoffzufuhr ablaufen, entstehen. Zur spurenanalytischen Erkennung von Glimmbränden in Abfallbunkern ist in DE-Z.: VGB Kraftwerktechnik 6/2000, S. 71 bis 74, 73 zur Überwachung ein Gassensorsystem vorgesehen, das mehrere typische Brandgase simultan erfasst. Die Anzeige eines vorliegenden Glimmbrandes ist jedoch unsicher, weil der Kontakt der Brandgase mit dem Gassensor nicht unter allen Bedingungen sichergestellt werden kann. Ferner ist die Detektion eines Glimmbrandes mittels Wärmestrahlung erwähnt, wobei die Strahlungsleistung in einem geeigneten Spektralbereich des Lichtspektrums gemessen wird. Die Erkennung von Glimmbränden erfordert eine hohe Messgenauigkeit (Temperaturauflösung), um die naturgemäß geringen Temperaturunterschiede, mit denen sich Glimmbrände verraten, noch einigermaßen sicher erfassen zu können. Die Detektion erfolgt normalerweise durch Vergleich mit einer Temperaturgrenze (Alarmtemperatur). Mit dieser Methode können oberflächennahe Glimmbrände erkannt werden. Verdeckte Glimmbrände können dagegen nur dann mit ausreichender Sicherheit erkannt werden, wenn der Wärmetransport bis zur Oberfläche des Haufwerks wirksam wird. Die Erkennung der erwärmten Bereiche in der Haufwerksoberfläche ist nur dann möglich, wenn die betroffene Oberfläche für den Detektor (IR-Kamera) sichtbar ist.

Glimmbrände, die sich in der Tiefe des Haufwerks entwickeln, können wegen der Wärmedämmung durch das Haufwerk in der Regel nur schwer mit Hilfe von IR-Messgeräten detektiert werden. Die über den Glimmbränden befindliche Haufwerkschicht verhindert die Erkennung der Temperaturdifferenz. Hingegen können bereits geringe Temperaturunterschiede an der Oberfläche mit IR-Geräten sehr genau lokalisiert und gemessen werden.

Aus der DE-Z.: Müll und Abfall 2/00, S. 77 bis 80 und 3/00, S. 145 bis 149 ist bekannt, Glimmbrände in Deponiekörpern frühzeitig dadurch zu erkennen, dass Kohlenmonoxid und Wasserstoff, die in recht hohen Konzentrationen bei Bränden die unter mangelhafter Sauerstoffzufuhr ablaufen, spurenanalytisch durch ein gaschromatisches Analyseverfahren zu bestimmen. Die Probenahme erfolgt durch die Entnahme an Gasleitungen mit aluminiumbeschichteten Gasbeuteln und die Analyse der Proben mittels zweidimensionaler Gaschromatografie und Detektion mit einem Helium-Ionisationsdetektor. Zur spurenanalytischen Bestimmung von Kohlenmonoxid kommen Prüfröhrchen, Sensorsysteme (v.a. elektrochemische Sensoren), Fourietransformations-Infrarot-Spektroskopie und Gaschromatografie zum Einsatz. Dabei sind Kohlenmonoxid-Konzentrationen von < 10 mg / m³ als unkritisch zu bewerten; werden jedoch höhere Konzentrationen ermittelt, so sollte der Deponiebereich beobachtet werden. Für den Fall einer kontinuierlichen Zunahme der Kohlenmonoxid-Konzentration muss vom Vorliegen eines Glimmbrandes in der Deponie ausgegangen werden.

Es ist die Aufgabe der vorliegenden Erfindung, ein Verfahren bereitzustellen, das eine Früherkennung und Lokalisierung eines Glimmbrands in geschlossenen Räumen für einen planmäßigen Aufenthalt eingelagerter, ganz oder teilweise aus biologischer Substanz bestehender Schüttung, in die kontinuierlich eine gesteuerte Luftmenge eingeblasen wird und diese durchströmt, ermöglicht.

Die Lösung dieser Aufgabe geschieht dadurch, dass das in der aus der Schüttung austretenden Abluft enthaltene Kohlenmonoxid mengen- oder konzentrationsmäßig erfasst, die erfasste Kohlenmonoxidmenge bzw. -konzentration mit einem vorgegebenen Grundmengen- bzw. Grundkonzentrationswert von Kohlenmonoxid verglichen und bei Überschreiten des jeweiligen Werts das Einblasen von Luft in die Schüttung unterbrochen wird. Die kontinuierliche Bestimmung der in der Abluft vorhandenen Kohlenmonoxidmenge bzw. -konzentration ermöglicht ein so frühzeitiges Erkennen von Glimmbränden, dass durch geeignete Maßnahmen die Ausbildung eines Flammbrandes vermieden werden kann.

Zur Bewertung von Kohlenmonoxidbestimmungen der Abluft im Hinblick auf Glimmbrände kann gefolgert werden, dass eine CO-Produktion von ≤ 10 l / min (in Abhängigkeit vom verfahrenstechnisch bedingten Luftvolumenstrom können sich dabei CO-Gehalte in der Abluft von 1 bis 300 ppm in derartigen Schüttungen einstellen) als unkritisch zu bewerten sind. Bleiben trotz der Unterbrechung des Lufteinblasens in die Schüttungen die Werte der Kohlenmonoxidmenge von 10 l / min konstant oder steigen diese sogar weiter an, so ist nach einem weiteren erfindungsgemäßen Merkmal die freie Oberfläche der Schüttung mit einer Schicht von Löschschaum zu belegen. Spätestens bei Erreichen einer CO-Produktion von > 20 l / min und damit einer deutlich erhöhten CO-Konzentration in der Luft muss von einem Glimmbrand in der Schüttung ausgegangen werden.

Entsprechend der verfahrenstechnischen Gestaltung der Behandlung von Schüttungen, die biologische Bestandteile enthalten, hat es sich als vorteilhaft erwiesen, dass die CO-Menge bzw. -Konzentration der aus der Schüttung austretenden Abluft an mehreren Stellen erfasst wird. Zur Erfassung der CO-Menge bzw. -Konzentration werden zweckmäßigerweise Kohlenmonoxid-Analysatoren eingebaut, die eine hohe Auflösung und eine geringe Querempfindlichkeit gegen andere Komponenten, insbesondere Kohlenwasserstoffe, besitzen.

Um die Entstehung von Glimmbränden durch von außen eingetragene, die Schüttung bildenden Materialien zu vermeiden, ist es im Rahmen der Ausgestaltung der Erfindung angebracht, die Temperatur des die Schüttung bildenden Materials beim Abwurf in den geschlossenen Raum kontinuierlich zu detektieren. Der erfasste Temperaturwert wird mit einem vorgegebenen Grundtemperaturwert verglichen, bei Überschreiten des Grundtemperaturwerts wird der Materialfluss unterbrochen und die eine höhere Temperatur als den Grundtemperaturwert aufweisenden Materialteile aus dem Eintrag entfernt. Der Grundtemperaturwert ist in Abhängigkeit von der Selbstentzündungstemperatur des abgeworfenen Materials vorzugsweise auf einen Wert von 60 bis 80 °C einzustellen.

Die kontinuierliche Messung der Oberflächentemperatur der die Schüttung bildenden Materialien beim Abwurf wird zweckmäßigerweise mittels einer hochauflösenden IR-Thermokamera gemessen, die in einem Zeitfenster von 0,1 s bei Substanzen mit einem Teilchendurchmesser von 1 cm Temperaturunterschiede von 1 °C auflöst.

Da nicht auszuschließen ist, dass sich beim Einsatz von Elektroerhitzern zum Anwärmen der in die Schüttung eingetragenen Luft in der Luft enthaltene Staubpartikeln an den Elektroerhitzern entzünden und dann in die Schüttung eingetragen werden können, ist im Rahmen der besonderen Ausgestaltung des erfindungsgemäßen Verfahrens vorgesehen, die Staubbeladung der einzutragenden Luft kontinuierlich zu messen und die erfasste Staubmenge mit einem vorgegebenen Grundstaubmengenwert zu vergleichen. Bei Überschreiten einer kritischen Staubmenge, vorzugsweise von 5 mg/m³ Abluft, werden die Elektrolufterhitzer automatisch abgeschaltet und/oder das Einblasen von Luft unterbrochen.

Das erfindungsgemäße Verfahren ist insbesondere für den Einsatz bei der Verrottung von Abfall mit großem organischen Anteil in geschlossenen Containern oder in Tunnelreaktoren, bei denen die zerkleinerten Abfallstoffe in einer Schichtdicke von 1 bis 5 m in stetigem Fluss von einer Eintragszone über einen geschlossenen Förderweg zu einer Austragszone transportiert, von Luft durchströmt, aerob verrottet und auf einem Feuchtigkeitsgehalt von ≤ 15 Masse-% entwässert werden, geeignet

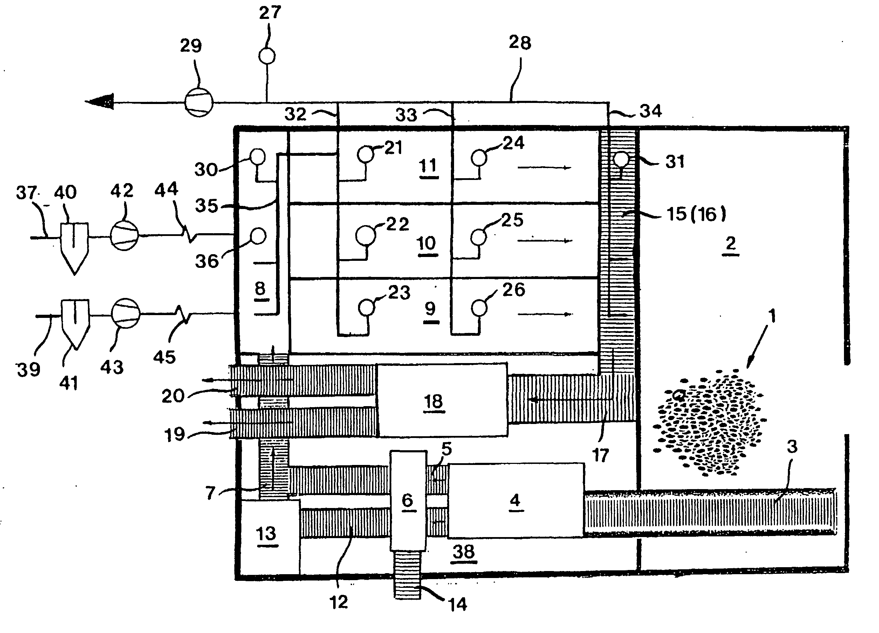

Das Schema eines Systems zur kontinuierlichen Messung der bei der Verrottung einer Abfallmischung aus Hausmüll, Garten- u.a. organischen Abfällen in drei parallel nebeneinander angeordneten Tunnelreaktoren der in der Abluft vorhandenen Kohlenmonoxidmenge und der beim Eintrag der Abfallstoffinischung in die Eintragszone herrschenden Temperaturen ist in der Zeichnung beispielhaft dargestellt und wird nachfolgend näher erläutert.

Nach dem Verwiegen der Abfallmischung (1) gelangt diese in die Anlieferungshalle (2), wo eine Sichtkontrolle erfolgt und gröbere Bestandteile aussortiert werden. Mit Hilfe eines Radladers wird der Abfall (1) auf den Gurtförderer (3) aufgegeben und in die Siebtrommel (4) gefördert, in der der Abfall (1) über Lochbleche mit Öffnungen von 60 mm in eine Grobkornfraktion von > 60 mm und eine Feinkornfraktion getrennt wird. Die Feinkornfraktion wird mittels des Gurtförderers (5) über einen Magnetscheider (6) transportiert und dann auf den Gurtförderer (7) abgeworfen, der den Abfall (1) direkt in die Eintragszone (8) der drei Tunnelreaktoren (9, 10, 11) abgibt. Die auf den Gurtförderer (12) abgeworfene Grobkornfraktion passiert ebenfalls den Magnetscheider (6) und wird einem Zerkleinerer (13), der den Abfall auf eine Korngröße von ca. 160 mm homogenisiert, zugeführt, auf den Gurtförderer (7) ausgetragen und dann ebenfalls in die Eintragszone (8) abgeworfen. Die von dem Magnetscheider (6) abgetrennten Eisenmetallteile werden über den Gurtförderer (12) in einen nicht dargestellten Container abgeworfen. Der Gurtförderer (7) wirft den Abfall auf ein in Richtung der Längsachse der Eintragszone (8) bewegliches nicht dargestelltes Förderband ab, das den Abfall in die drei Tunnelreaktoren (9, 10, 11) eingibt und gleichmäßig darauf verteilt. Der Abfall wird dann in einem ca. 10 Tage dauernden Prozess durch die jeweils 37 m langen Tunnelreaktoren (9, 10, 11) mittels eines nicht dargestellten Schubbodens hindurch befördert und dabei einer biologischen Trocknung, bei der der organische Anteil des Abfalls von quer zur Förderrichtung eingeblasener Luft durchströmt, aerob verrottet und auf einem Feuchtigkeitsgehalt von ≤ 15 Masse-% entwässert wird, unterworfen. Der Abfall wird mittels des Schubbodens zum Ende der Tunnelreaktoren (9, 10, 11) befördert, wo er stoßweise auf dem Gurtförderer (15) ausgetragen und in der Austragszone (16) auseinandergezogen wird. Der durch den Gurtförderer (17) weitertransportierte Abfall wird in der Siebtrommel (18) in eine Grobkomfraktion > 60 mm und eine Feinkornfraktion < 60 mm getrennt. Die Feinkornfraktion wird über den Gurtförderer (19) in einen nicht dargestellten Container agbeworfen und anschließend zur Deponie gebracht. Die Grobkornfraktion wird über den Gurtförderer (20) zu einer Ballenpresse transportiert und hier zu Ballen verpresst. Der in den Tunnelreaktoren lagernde Abfall wird über ein Belüftungssystem über den Schubboden belüftet. Die bei der Verrottung entstehende Wärme wird mittels Wärmeaustauscher zur Trocknung des Abfalls benutzt. Die Abluft wird in der Eintragszone (8) und der Austragszone (16) erfasst, abgesaugt und über einen nicht dargestellten Gegenstromwäscher, der zur Abscheidung von Staub, Geruchsstoffen und zur Befeuchtung dient, geleitet. Die Kohlenmonoxidmenge der Abluft wird in den drei Tunnelreaktoren (9, 10, 11) an sechs getrennten Messstellen 21 bis 26 und an einer Messstelle (27) in der Abluftsammelleitung (28), über die die Abluft mittels des Sauggebläses (29) ausgeleitet wird, kontinuierlich mittels handelsüblicher CO-Analysatoren detektiert. An den Messstellen (21 bis 27) erfolgt eine permanente Probenahme. Jeweils eine weitere Messstelle (30, 31) ist in der Eintragszone (8) und in der Austragszone (16) der Tunnelreaktoren (9, 10, 11) angeordnet. Aus Gründen der Zweckmäßigkeit sind die Messstellen (21 bis 26, 31) jeweils zu einer Gruppe zusammengefasst, deren Abluftproben auf zwei separaten nicht dargestellten Analysatoren verteilt werden. Die Signale der Analysatoren werden von einem Leitsystem verarbeitet und jeder einzelnen Messstelle (21 bis 27, 30, 31) zugeordnet. Über die beiden Abluft-Teilsammelleitungen (32, 33) und über die in der Austragszone (16) angebrachte Abluft-Teilsammelleitung (34) wird die Abluft in die Abluft-Sammelleitung (28) eingespeist. Aus der in der Eintragszone (8) angebrachten Abluft-Teilsammelleitung (35) strömt die Abluft in die Abluft-Teilsammelleitung (32).

Jeder Messstelle (21 bis 27, 30, 31) sind eine Vor- und eine Hauptalarmstufe mit jeweils einem Grundmengenwert an Kohlenmonoxid zugeordnet. Bei Überschreiten des Grundmengenwerts wird ein Voralarm ausgelöst und der Lufteintrag in den in den Tunnelreaktoren befindlichen Abfall automatisch abgeschaltet. Bleibt nach dem Abschalten des Lufteintrags die Kohlenmonoxidmenge konstant oder ist eine kontinuierliche Zunahme der Kohlenmonoxidmenge zu beobachten, so muss vom Vorliegen eines Glimmbrandes ausgegangen werden. Dieser wird durch Auftragen einer Schicht von Löschschaum auf die freie Oberfläche des Abfalls oder durch andere geeignete Maßnahmen erstickt.

Im Bereich der Eintragszone (8) befindet sich eine IR-Thermokamera (36) mit der die Temperatur des zerkleinerten Abfalls beim Abwurf von dem Gurtförderer (7) auf das bewegliche, nicht dargestellte Förderband und beim freien Fall kontinuierlich gemessen wird. An der Abwurfstelle und beim freien Fall sind die Abfallpartikel nicht dicht gepackt, so dass heiße Abfallpartikel durch andere Abfallpartikel nicht verdeckt werden. Bei der Detektion von Abfallpartikeln mit einer Temperatur von 80 °C und höher wird das Eintragen des Abfalls in die Eintragszone (8) unterbrochen. Überwacht wird ein fester Bildausschnitt, der die Abwurfkante des Gurtförderers (7), die frei fallenden Abfallpartikel und einem Teil des Gurtförderers (7) umfasst.

Zum Überwachen der Staubbeladung der in die Tunnelreaktoren (9, 10, 11) eingetragenen aus der Lagerhalle für die verpressten Abfallballen über Leitung (37) und den Anlieferungshalle (2) und der Aufbereitungshalle (38) über Leitung (39) angesaugten Luft ist jeweils nach einem in die Leitung eingebauten Schlauchfilter (40, 41) vor jeweils einem nachgeschalteten Gebläse (42, 43) mit nachgeordnetem Elektrolufterhitzer (44, 45) eine Messstelle zur kontinuierlichen Messung der Staubbeladung der Luft angebracht. Bei Überschreiten eines vorgegebenen Grenzwerts von z.B. 5 mg/m³ Luft wird ein Alarm ausgelöst und die Elektrolufterhitzer abgeschaltet. Auf diese Weise soll eine zu hohe Staubbeladung der eingetragenen Luft ausgeschlossen werden, da die Staubpartikel gegebenenfalls dazu neigen, sich an den Heizelementen der Elektrolufterhitzer zu entzünden.

## Patentansprüche

1. Verfahren zur kontinuierlichen analytischen Bestimmung von Kohlenmonoxid in der Abluft einer in einem geschlossenen Raum zur Lagerung, Entwässerung und/oder Behandlung für einen planmäßigen Aufenthalt eingelagerten, ganz oder teilweise aus biologischer Substanz bestehenden Schüttung, in die kontinuierlich eine gesteuerte Luftmenge eingeblasen und von dieser durchströmt wird, wobei das in der aus der Schüttung austretenden Abluft enthaltene Kohlenmonoxidmengen oder -konzentrationsmäßig erfasst, die erfasste Kohlenmonoxidmenge bzw. -konzentration mit einem vorgegebenen Grundmengen- bzw. Grundkonzentrationswert von Kohlenmonoxid verglichen und bei Überschreiten des jeweiligen Werts der Produktion von Kohlenmonoxid entgegengewirkt wird.

2. Verfahren nach Anspruch 1, **dadurch gekennzeichnet, dass** das Einblasen der Luft unterbrochen wird.

3. Verfahren nach einem der Ansprüche 1 und 2, **dadurch gekennzeichnet, dass** der Grundmengenwert von Kohlenmonoxid 10 l/min und der Grundkonzentrationswert in Abhängigkeit von der eingeblasenen Luftmenge 1 bis 400 ppm beträgt.

4. Verfahren nach einem der Ansprüche 1 bis 3 **dadurch gekennzeichnet, dass** die freie Oberfläche der Schüttung mit einer Schicht von Löschschaum belegt wird, falls nach Unterbrechung des Lufteinblasens die Kohlenmonoxidmenge von 10 l/min konstant bleibt oder die Kohlenmonoxidmenge und damit verbunden die Kohlenmonoxidkonzentration in der Luft weiter ansteigt.

5. Verfahren nach einem der Ansprüche 1 bis 4 **dadurch gekennzeichnet, dass** die freie Oberfläche der Schüttung mit einer Schicht eines Löschschaums belegt wird, falls der Grundmengenwert von Kohlenmonoxid von 20 l/min oder der Grundkonzentrationswert von Kohlenmonoxid in Abhängigkeit von der Abluftmenge von 2 bis 800 ppm überschritten wird.

6. Verfahren nach einem der Ansprüche 1 bis 5 **dadurch gekennzeichnet, dass** die Erfassung der Abluft an mehreren Stellen erfolgt.

7. Verfahren nach einem der Ansprüche 1 bis 6 **dadurch gekennzeichnet, dass** die Abluft der Eintragszone und der Austragszone erfasst wird.

8. Verfahren nach einem der Ansprüche 1 bis 7 **dadurch gekennzeichnet, dass** die Kohlenmonoxidmenge bzw. Kohlenmonoxidkonzentration der aus der Schüttung austretenden Abluft mittels eines geeigneten Sensorsystems erfasst wird.

9. Verfahren nach einem der Ansprüche 1 bis 8 **dadurch gekennzeichnet, dass** die Temperatur des die Schüttung bildenden Materials beim Abwurf in den geschlossenen Raum kontinuierlich detektiert, der erfasste Temperaturwert mit einem vorgegebenen Grundtemperaturwert verglichen, bei Überschreiten des Grundtemperaturwerts der Abwurf der die Schüttung bildenden Materials unterbrochen und dass eine höhere Temperatur als der Grundtemperaturwert aufweisende Material aus dem Eintrag entfernt wird.

10. Verfahren nach Anspruch 9 **dadurch gekennzeichnet, dass** der Grundtemperaturwert in Abhängigkeit von der Selbstentzündungstemperatur des abgeworfenen Materials auf einen Wert von 60 bis 90 °C eingestellt wird.

11. Verfahren nach einem der Ansprüche 9 und 10 **dadurch gekennzeichnet, dass** die Detektion der Temperatur mit einer IR-Thermokamera erfolgt, die in einem Zeitfenster von 0,1 s bei einer Materialteilchengröße von 1 cm Temperaturunterschiede von 1 °C auflöst.

12. Verfahren nach einem der Ansprüche 1 bis 11 **dadurch gekennzeichnet, dass** die in der in die Schüttung eingeblasenen Luftmenge enthaltene Staubmenge kontinuierlich erfasst, die erfasste Staubmenge mit einem vorgegebenen Grundstaubmengenwert verglichen, und bei Überschreiten des Grundstaubmengenwerts die Erwärmung der eingeblasenen Luft und/oder das Einblasen von Luft unterbrochen wird.

13. Verfahren nach Anspruch 12 **dadurch gekennzeichnet, dass** bei Überschreiten einer kritischen Staubmenge von 5 mg / m³ Abluft ein Voralarm ausgelöst wird.

14. Verwendung des Verfahrens nach einem der Ansprüche 1 bis 13 für die Verrottung von Abfallstoffen mit organischem Anteil in Tunnelreaktoren, bei denen die zerkleinerten Abfallstoffe in einer Schichtdicke von 1 bis 5 m im stetigen Fluss von einer Eintragszone über einen geschlossenen Förderweg zu einer Austragszone transportiert, von Luft durchströmt, aerob verrottet und auf einen Feuchtigkeitsgehalt von ≤ 15 Masse-% entwässert werden.

15. Verwendung des Verfahrens nach einem der Ansprüche 1 bis 13 für Lagerung, Transport und/oder Verarbeitung von biologischen Stoffen, wie Heu, Stroh, Holz, holzähnliche Abfälle, Altholz, Abfallholz, Getreide, Öl, ölhaltige Produkte, Gartenabfälle, Klärschlamm, klärschlammhaltige Abfälle und Sonderabfälle.

## Claims

1. A method of continuous analytical determination of carbon monoxide in the exhaust air from a filling, wholly or partially comprising biological matter, which is stored in an enclosed space for storage, dewatering and/or treatment and into which a controlled amount of air is injected and flows through it, in which the amount or concentration of carbon monoxide contained in the exhaust air leaving the filling is determined, the determined amount or concentration of carbon monoxide is compared with a predetermined base amount or concentration value of carbon monoxide and when the respective value is exceeded the production of carbon monoxide is inhibited.

2. A method as claimed in claim 1, **characterised in that** the injection of the air is interrupted.

3. A method as claimed in one of claims 1 and 2, **characterised in that** the base amount value of carbon monoxide is 10 l/min and the base concentration value is 1 to 400ppm, depending on the injected volume of air.

4. A method as claimed in one of claims 1 to 3, **characterised in that** the free surface of the filling is covered with a layer of quenching foam in the event that, after interruption of the injection of air, the amount of carbon monoxide of 10 l/min remains constant or the amount of carbon monoxide and, associated therewith, the carbon monoxide concentration in the air rises further.

5. A method as claimed in one of claims 1 to 4, **characterised in that** the free surface of the filling is covered with a layer of a quenching foam in the event that the base amount value of carbon monoxide of 20 l/min or the base concentration value of carbon monoxide of 2 to 800ppm, depending on the exhaust air volume is exceeded.

6. A method as claimed in one of claims 1 to 5, **characterised in that** the measurement on the exhaust air is effected at a plurality of positions.

7. A method as claimed in one of claims 1 to 6, **characterised in that** the exhaust air in the entry zone and the discharge zone is measured.

8. A method as claimed in one of claims 1 to 7, **characterised in that** the amount of carbon monoxide or the concentration of carbon monoxide in the exhaust air leaving the filling is measured by means of a suitable sensor system.

9. A method as claimed in one of claims 1 to 8, **characterised in that** the temperature of the material constituting the filling is continuously detected when it is deposited into the enclosed space, the measured temperature value is compared with a predetermined base temperature value, the depositing of the material constituting the filling is interrupted when the base temperature value is exceeded and that material having a temperature higher than the base temperature value is removed from the input.

10. A method as claimed in claim 9, **characterised in that** the base temperature value is adjusted in dependence on the self-ignition temperature of the deposited material to a value of 60-90°C.

11. A method as claimed in one of claims 9 and 10, **characterised in that** the detection of the temperature is effected with an IR thermal camera, which resolves temperature differences of 1°C in a time window of 0.1s at a material particle size of 1cm.

12. A method as claimed in one of claims 1 to 11, **characterised in that** the amount of dust contained in the volume of air injected into the filling is continuously determined, the determined dust amount is compared with a predetermined base dust amount value and when the base dust amount value is exceeded the heating of the injected air and/or the injection of air is interrupted.

13. A method as claimed in claim 12, **characterised in that** a pre-alarm is triggered when a critical dust amount of 5mg/m³ exhaust air is exceeded.

14. Use of the method as claimed in one of claims 1 to 13 for the decomposition of waste materials with an organic content in funnel reactors, in which the comminuted waste materials are transported in a layer with a thickness of 1 to 5m in a constant flow from an input zone via a closed transfer path to an outlet zone, air flows through it, it is aerobically decomposed and it is dewatered to a moisture content of ≤15% by mass.

15. Use of the method as claimed in one of claims 1 to 13 for storing, transporting and/or processing biological materials, such as hay, straw, wood, wood-like waste material, old wood, waste wood, grain, oil, oil-containing products, garden waste, sewage sludge, waste containing sewage sludge and special waste.

## Revendications

1. Procédé de détermination analytique continue du monoxyde de carbone dans l'air sortant d'un empilement en vrac constitué complètement ou partiellement de substance biologique entreposé pour un séjour systématique dans un espace fermé pour le stockage, la déshydratation et/ou le traitement, empilement dans lequel une quantité d'air commandée est insufflée en continu et qui est traversé par cette dernière, sachant que le monoxyde de carbone contenu dans l'air sortant de l'empilement en vrac est saisi du point de vue de sa quantité ou de sa concentration, que la quantité ou la concentration de monoxyde de carbone saisie est comparée à une valeur de base de quantité, respectivement de concentration de monoxyde de carbone et, qu'en cas de dépassement de la valeur respective, on agit à l'encontre de la production de monoxyde de carbone.

2. Procédé selon la revendication 1, **caractérisé en ce que** l'insufflation de l'air est interrompue.

3. Procédé selon l'une quelconque des revendications 1 ou 2, **caractérisé en ce que** la valeur de base de la quantité de monoxyde de carbone est de 10 l/min et **en ce que** la valeur de base de la concentration est de 1 à 400 ppm en fonction de la quantité d'air insufflée.

4. Procédé selon l'une quelconque des revendications 1 à 3, **caractérisé en ce que** la surface libre de l'empilement en vrac est garnie d'une couche de mousse d'extinction si, après l'interruption de l'insufflation de l'air, la quantité de monoxyde de carbone de 10 l/min reste constante ou si la quantité de monoxyde de carbone et la concentration de monoxyde de carbone dans l'air, qui en dépend, continuent d'augmenter.

5. Procédé selon l'une quelconque des revendications 1 à 4, **caractérisé en ce que** la surface libre de l'empilement en vrac est garnie d'une couche de mousse d'extinction si la valeur de base de la quantité de monoxyde de carbone de 20 l/min ou la valeur de base de la concentration du monoxyde de carbone, de 2 à 800 ppm en fonction de la quantité d'air sortant, est dépassée.

6. Procédé selon l'une quelconque des revendications 1 à 5, **caractérisé en ce que** la saisie de l'air sortant s'effectue en plusieurs endroits.

7. Procédé selon l'une quelconque des revendications 1 à 6, **caractérisé en ce que** l'air sortant de la zone d'entrée et de la zone de sortie est saisi.

8. Procédé selon l'une quelconque des revendications 1 à 7, **caractérisé en ce que** la quantité de monoxyde de carbone, respectivement la concentration en monoxyde de carbone de l'air sortant de l'empilement en vrac sont mesurées au moyen d'un système de capteurs appropriés.

9. Procédé selon l'une quelconque des revendications 1 à 8, **caractérisé en ce que** la température du matériau formant l'empilement en vrac est détectée en continu lors de l'éjection dans l'espace fermé, **en ce que** la valeur de température détectée est comparée à une valeur de base de température prédéfinie, **en ce que**, lors du dépassement de la valeur de base de température, l'éjection du matériau formant l'empilement en vrac est interrompue, et **en ce que** le matériau présentant une température plus élevée que la valeur de base de température est retiré du chargement.

10. Procédé selon la revendication 9, **caractérisé en ce que** la valeur de base de température est réglée en fonction de la température d'auto-inflammation du matériau injecté à une valeur de 60 à 90°C.

11. Procédé selon l'une quelconque des revendications 9 et 10, **caractérisé en ce que** la détection de la température s'effectue par un appareil de thermographie à IR qui, dans une fenêtre de temps de 0,1 s, résout des différences de température de 1°C sur des tailles de particules de 1 cm.

12. Procédé selon l'une quelconque des revendications 1 à 11, **caractérisé en ce que** la quantité de poussière contenue dans la quantité d'air insufflée dans l'empilement en vrac est saisi en continu, **en ce que** la quantité de poussière saisie est comparée à une valeur de base de quantité de poussière, et **en ce que**, lors du dépassement de la valeur de base de quantité de poussière, le chauffage de l'air insufflé et/ou l'insufflation de l'air sont interrompus.

13. Procédé selon la revendication 12, **caractérisé en ce que**, lors d'un dépassement d'une quantité critique de poussière de 5 mg/m³ d'air sortant, une pré-alarme est déclenchée.

14. Utilisation du procédé selon l'une quelconque des revendications 1 à 13 pour la décomposition de déchets avec une partie organique dans des réacteurs tunnels, dans lesquels les déchets fractionnés, en une épaisseur de couche de 1 à 5 m, sont transportés en flux continu de la zone d'entrée, par une voie de transport fermée, à une zone de sortie, sont traversés par de l'air, sont décomposés de manière aérobie et sont déshydratés jusqu'à une teneur en humidité de ≤ 15 % en masse.

15. Utilisation du procédé selon l'une quelconque des revendications 1 à 13 pour le stockage, le transport et/ou le traitement de substances biologiques telles le foin, la paille, le bois, les déchets ligneux, le vieux bois, les déchets de bois, les céréales, l'huile, les produits contenant de l'huile, les déchets de jardin, les boues de curage, les déchets apparentés aux boues de curage et les déchets spéciaux.
